# FASCICULE DE BREVET EUROPEEN

(11) **EP 3 150 457 B1**
(45) Date de publication et mention de la délivrance du brevet: **29.04.2020**
(21) Numéro de dépôt: 16191851.1
(22) Date de dépôt: 30.09.2016
(51) Int. Cl.: B61C 17/04, B61D 27/00

(54) **DISPOSITIF DE CLIMATISATION POUR UNE CABINE DE CONDUITE, NOTAMMENT DE VÉHICULE FERROVIAIRE**
KLIMAANLAGE FÜR EINE FAHRERKABINE, INSBESONDERE EINES SCHIENENFAHRZEUGS
AN AIR CONDITIONING DEVICE FOR A DRIVING CABIN, IN PARTICULAR OF A RAILWAY VEHICLE

(30) Priorité: 30.09.2015 FR 1559242
(43) Date de publication de la demande: 05.04.2017
(73) Titulaire: ALSTOM Transport Technologies, 93400 Saint-Ouen (FR)
(72) Inventeur: DO, Huu-Thi, 17300 Rochefort (FR)
(74) Mandataire: Lavoix

(56) Documents cités:
- EP-A1- 1 792 762
- EP-A2- 0 298 952
- DE-A1-102010 062 660
- DE-U1- 29 600 512
- FR-A1- 2 890 002

## Description

La présente invention concerne un dispositif de climatisation pour une cabine de conduite, notamment de véhicule ferroviaire. L'invention peut également être mise en œuvre pour toute cabine de conduite, par exemple de véhicule de transport routier, ou de véhicule automobile.

On connait déjà, dans l'état de la technique, un dispositif de climatisation pour une cabine de conduite, comportant un échangeur de chaleur propre à échanger de la chaleur avec de l'air circulant dans le dispositif de climatisation.

De l'air de la cabine pénètre dans le dispositif de climatisation par une entrée d'air, puis cet air est climatisé par l'échangeur de chaleur, puis l'air climatisé est soufflé dans la cabine à travers une sortie d'air.

Habituellement, la sortie d'air est orientée vers au moins un siège de la cabine, où se trouve un utilisateur, notamment un conducteur ou un passager. Or, l'air climatisé soufflé vers l'utilisateur peut être considéré comme inconfortable pour cet utilisateur.

En outre, la température de l'air dans la cabine n'est pas homogène. Plus particulièrement, en considérant une première zone de cabine vers laquelle l'air climatisé est soufflé, et une seconde zone de cabine vers laquelle l'air climatisé n'est pas soufflé, la première zone de cabine peut présenter une différence de température, parfois importante, avec la seconde zone de cabine.

Le document EP 0 298 952 A2 décrit un dispositif de climatisation pour une cabine de conduite, notamment de véhicule ferroviaire, comportant un échangeur de chaleur destiné à échanger de la chaleur avec de l'air circulant dans le dispositif de climatisation, le dispositif comportant un caisson de distribution d'air, s'étendant dans une direction longitudinale entre une partie avant et une partiel arrière , et dans une direction transversale entre deux parties latérales, le caisson de distribution étant destiné à être fixé à un plafond de la cabine de conduite, et comprenant:
- dans sa partie avant, une entrée avant d'air provenant de la cabine, reliée en amont de l'échangeur de chaleur, et
- dans chacune de ses parties latérales, une sortie latérale respective d'air climatisé, reliée en aval de l'échangeur de chaleur.

L'invention a notamment pour but de remédier à ces inconvénients, en proposant un dispositif de climatisation pour une cabine de conduite, permettant une répartition homogène de la température dans la cabine, et ne formant pas une source d'inconfort pour les utilisateurs.

A cet effet, l'invention a notamment pour objet un dispositif de climatisation selon la revendication 1.

Les sorties latérales d'air sont destinées à diffuser de l'air climatisé vers des parois latérales de la cabine, généralement des baies latérales, générant ainsi, de part et d'autre de la cabine, des rouleaux de convection qui assurent un brassage global de l'air dans la cabine, permettant ainsi d'homogénéiser la température de l'air dans la cabine.

Un dispositif de climatisation selon l'invention peut comporter en outre l'une ou plusieurs des caractéristiques suivantes, prises seules ou selon toutes combinaisons techniquement envisageables.
- Le caisson de distribution comporte, dans sa partie arrière, une sortie arrière d'air climatisé, reliée en aval de l'échangeur de chaleur.
- Le caisson de distribution comporte des moyens de répartitions de l'air climatisé issu de l'échangeur de chaleur, propres à diriger : entre 35 et 45%, par exemple environ 40%, de l'air climatisé issu de l'échangeur de chaleur vers la sortie arrière d'air, et entre 27,5 et 32,5%, par exemple environ 30%, de l'air climatisé issu de l'échangeur de chaleur vers chaque sortie latérale d'air.
- La sortie arrière d'air climatisé comporte un premier organe d'orientation de flux d'air, propre à donner au flux d'air soufflé par cette sortie arrière une première direction de soufflage d'air prédéfinie.
- La première direction de soufflage d'air prédéfinie est sensiblement parallèle à la direction longitudinale.
- L'entrée avant d'air présente une forme générale rectangulaire de longueur sensiblement égale à 600 mm et de largeur sensiblement égale à 23 mm, la sortie arrière d'air présente une forme générale rectangulaire de longueur sensiblement égale à 600 mm et de largeur sensiblement égale à 12 mm, et chaque sortie latérale d'air présente une forme générale rectangulaire de longueur sensiblement égale à 300 mm et de largeur sensiblement égale à 25 mm.

L'invention concerne également une cabine de conduite, notamment pour un véhicule ferroviaire, délimitée en hauteur par un plafond, et délimitée dans une direction transversale par deux parois latérales, caractérisée en ce qu'elle comporte un dispositif de climatisation tel que défini précédemment, dont le caisson de distribution d'air est fixé au plafond, chaque sortie latérale d'air étant agencée à proximité d'une paroi latérale respective.

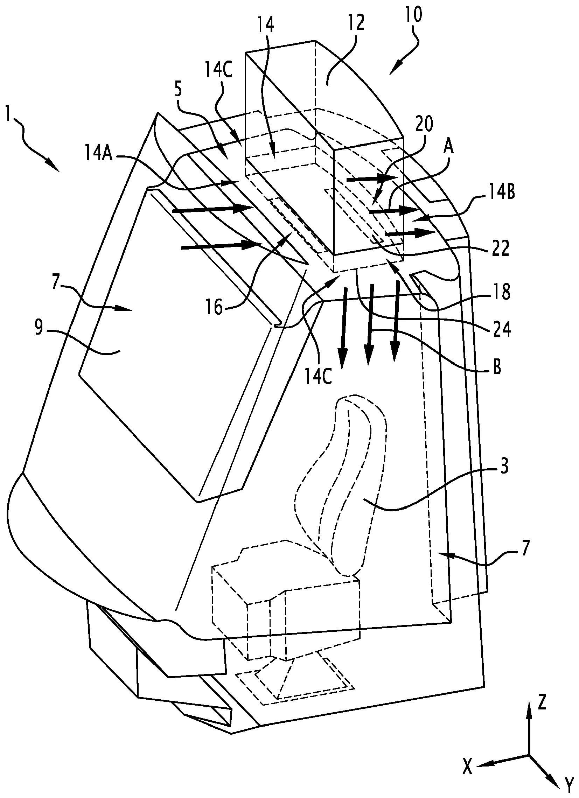

L'invention sera mieux comprise à la lecture de la description que va suivre, donnée uniquement à titre d'exemple et faite en se référant à la figure annexée, qui est une vue en perspective d'une cabine de conduite comportant un dispositif de climatisation selon un exemple de mode de réalisation de l'invention.

On a représenté sur la figure une cabine 1 de conduite, notamment une cabine de conduite 1 de véhicule ferroviaire, par exemple de tramway ou de métro.

En variante, la cabine de conduite 1 peut être de tout type envisageable, par exemple une cabine de conduite pour un véhicule de transport routier, notamment un camion, ou pour un véhicule automobile.

La cabine de conduite 1 s'étend dans une direction longitudinale X, qui est la direction longitudinale classique du véhicule.

Dans la présente description, les termes « avant » et « arrière » sont considérés dans la direction longitudinale X, avec leur sens classique compte tenu du sens de circulation du véhicule.

La cabine de conduite 1 comporte au moins un siège 3 pour un utilisateur, notamment un conducteur du véhicule. La cabine de conduite 1 peut également comporter un second siège pour un passager ou un assistant de conduite.

La cabine de conduite 1 est classiquement délimitée en hauteur, dans une direction verticale Z perpendiculaire à la direction longitudinale X, par un plafond 5.

Par ailleurs, la cabine de conduite 1 est classiquement délimitée, dans une direction transversale Y perpendiculaire aux directions longitudinale X et verticale Z, par deux parois latérales 7. Chacune des parois latérales 7 comporte par exemple une baie latérale.

Enfin, la cabine de conduite 1 est délimitée, dans la direction longitudinale X, par un pare-brise avant 9.

La cabine de conduite comporte un dispositif de climatisation 10, destiné à modifier la température dans la cabine de conduite 1, en l'augmentant ou en la diminuant, en prélevant de l'air de la cabine, puis en soufflant de l'air climatisé dans cette cabine. Cet air climatisé peut être chauffé ou refroidi, en fonction de la configuration du dispositif de climatisation 10.

Le dispositif de climatisation 10 comporte un échangeur de chaleur 12 de type classique, destiné à échanger de la chaleur avec de l'air circulant dans le dispositif de climatisation 10. Cet échangeur de chaleur 12 fait partie d'un groupe de climatisation classique, agencé au-dessus de la cabine de conduite 1, notamment au-dessus du plafond 5.

Le groupe de climatisation est généralement réversible, c'est-à-dire qu'il peut, en fonction de sa configuration, prélever de la chaleur depuis l'air provenant de la cabine (auquel cas l'air climatisé est refroidi) ou céder de la chaleur à l'air provenant de la cabine (auquel cas l'air climatisé est chauffé).

Le dispositif de climatisation 10 comporte un caisson 14 de distribution d'air, s'étendant dans la direction longitudinale X entre une partie avant 14A et une partie arrière 14B, et dans la direction transversale Y entre deux parties latérales 14C symétriques.

Le caisson de distribution 14 est fixé au plafond 5 de la cabine de conduite 1.

Le caisson de distribution 14 est connecté à l'échangeur de chaleur 12, de sorte que sa partie avant 14A se trouve en amont de cet échangeur de chaleur 12 dans un sens de circulation d'air dans le dispositif de climatisation 10, et que sa partie arrière 14B, ainsi que ses parties latérales 14C, se situent en aval de l'échangeur de chaleur 12 dans le sens de circulation d'air dans le dispositif de climatisation 10.

Plus particulièrement, le caisson de distribution 14 comporte, dans sa partie avant 14A, une entrée avant 16 d'air provenant de la cabine de conduite 1, reliée en amont de l'échangeur de chaleur 12. Ainsi, l'air de la cabine 1 pénètre par cette entrée avant d'air 16 dans le dispositif de climatisation 10.

Cette entrée avant 16 est par exemple disposée à proximité du pare-brise 9.

L'entrée avant d'air 16 présente par exemple une forme générale rectangulaire de longueur (considérée dans la direction transversale Y) sensiblement égale à 600 mm et de largeur (considérée dans la direction verticale Z) sensiblement égale à 23 mm.

Le caisson de distribution 14 comporte, dans chacune de ses parties latérales 14C, une sortie latérale 18 respective d'air climatisé, reliée en aval de l'échangeur de chaleur 12.

Chaque sortie latérale 18 est agencée à proximité de l'une respective des parois latérales 7 de la cabine de conduite 1.

Chaque sortie latérale d'air 18 présente par exemple une forme générale rectangulaire de longueur (considérée dans la direction longitudinale X) sensiblement égale à 300 mm et de largeur (considérée dans la direction verticale Z) sensiblement égale à 25 mm.

Enfin, le caisson de distribution 14 comporte, dans sa partie arrière 14B, une sortie arrière 20 d'air climatisé, reliée en aval de l'échangeur de chaleur 12.

La sortie arrière d'air 20 présente par exemple une forme générale rectangulaire de longueur (considérée dans la direction transversale Y) sensiblement égale à 600 mm et de largeur (considérée dans la direction verticale Z) sensiblement égale à 12 mm,

Le caisson de distribution 14 comporte des moyens de répartitions de l'air climatisé issu de l'échangeur de chaleur 12, propres à répartir l'air climatisé vers la sortie arrière 20 et vers les sorties latérales 18.

Par exemple, ces moyens de répartition sont conformés pour diriger entre 35 et 45%, par exemple environ 40%, de l'air climatisé issu de l'échangeur de chaleur 12 vers la sortie arrière d'air 20, et entre 27,5 et 32,5%, par exemple environ 30%, de l'air climatisé issu de l'échangeur de chaleur 12 vers chaque sortie latérale d'air 18.

Avantageusement, la sortie arrière 20 d'air climatisé comporte un premier organe 22 d'orientation de flux d'air, propre à donner au flux d'air soufflé par cette sortie arrière 20 une première direction A de soufflage d'air prédéfinie. Le premier organe d'orientation 22 comporte généralement une grille de diffusion, de préférence métallique, par exemple fixée au caisson de distribution 14 par vissage.

La première direction de soufflage d'air A prédéfinie est sensiblement parallèle à la direction longitudinale X. Ainsi, l'air climatisé est soufflé par la sortie arrière 20 vers l'arrière de la cabine de conduite 1, et n'est donc pas dirigé vers le siège 3. Cet air climatisé ne forme donc pas une source d'inconfort pour l'utilisateur assis sur le siège 3.

Avantageusement, chaque sortie latérale 18 d'air climatisé comporte un second organe d'orientation de flux d'air 24, propre à donner au flux d'air soufflé par cette sortie latérale 18 une seconde direction B prédéfinie de soufflage respective. Le second organe d'orientation 24 comporte généralement une grille de diffusion, de préférence métallique, par exemple fixée au caisson de distribution 14 par vissage.

Pour chaque sortie latérale 18, la seconde direction prédéfinie B de soufflage correspondante forme de préférence un angle compris entre 20 et 25°, par exemple 22°, avec un plan transversal perpendiculaire à la direction longitudinale X, le flux d'air climatisé étant par exemple dirigé vers l'avant.

Par ailleurs, pour chaque sortie latérale 18, la seconde direction B prédéfinie de soufflage correspondante forme un angle compris entre 40 et 50°, par exemple 45°, avec un plan longitudinal perpendiculaire à la direction transversale Y, le flux d'air climatisé étant dirigé vers la paroi latérale 7 correspondante de la cabine de conduite 1.

Il apparait clairement que l'air climatisé sortant par les sorties latérales 18 permet de générer des rouleaux de convection, qui assurent un brassage de l'air dans la cabine de conduite 1, créant, en association avec l'air climatisé soufflé par la sortie arrière 20, un mouvement global du volume d'air dans la cabine 1, ce qui permet d'homogénéiser la température de l'air dans la cabine.

L'orientation du flux d'air climatisé sortant par les sorties latérales 18 définie ci-dessus permet d'optimiser cette génération de rouleaux de convection.

On notera que l'invention n'est pas limitée au mode de réalisation précédemment décrit, mais pourrait présenter diverses variantes sans sortir du cadre des revendications.

## Revendications

1. Dispositif de climatisation (10) pour une cabine de conduite (1), notamment de véhicule ferroviaire, comportant :
- un échangeur (12) de chaleur destiné à échanger de la chaleur avec de l'air circulant dans le dispositif de climatisation (10),
- un caisson (14) de distribution d'air, s'étendant dans une direction longitudinale (X) entre une partie avant (14A) et une partie arrière (14B), et dans une direction transversale entre deux parties latérales (14C), le caisson de distribution étant destiné à être fixé à un plafond (5) de la cabine de conduite (1), et comprenant :
• dans sa partie avant (14A), une entrée avant (16) d'air provenant de la cabine (1), reliée en amont de l'échangeur de chaleur (12), et
• dans chacune de ses parties latérales (14C), une sortie latérale (18) respective d'air climatisé, reliée en aval de l'échangeur de chaleur (12)
**caractérisé en ce que** :
- chaque sortie latérale (18) d'air climatisé comporte un second organe (24) d'orientation de flux d'air, propre à donner au flux d'air soufflé par cette sortie latérale (18) une seconde direction (B) prédéfinie de soufflage respective,
- pour chaque sortie latérale (18), la seconde direction prédéfinie de soufflage (B) correspondante forme un angle compris entre 20 et 25°, par exemple 22°, avec un plan transversal perpendiculaire à la direction longitudinale (X), le flux d'air climatisé étant de préférence dirigé vers l'avant, et
- pour chaque sortie latérale (18), la seconde direction prédéfinie de soufflage (B) correspondante forme un angle compris entre 40 et 50°, par exemple 45°, avec un plan longitudinal perpendiculaire à la direction transversale (Y), le flux d'air climatisé étant de préférence destiné à être dirigé vers une paroi latérale (7) de la cabine (1).

2. Dispositif de climatisation (10) selon la revendication 1, dans lequel le caisson de distribution (14) comporte, dans sa partie arrière (14B), une sortie arrière (20) d'air climatisé, reliée en aval de l'échangeur de chaleur (12).

3. Dispositif de climatisation (10) selon la revendication 2, dans lequel le caisson de distribution (14) comporte des moyens de répartitions de l'air climatisé issu de l'échangeur de chaleur, propres à diriger :
- entre 35 et 45%, par exemple environ 40%, de l'air climatisé issu de l'échangeur de chaleur (12) vers la sortie arrière d'air (20), et
- entre 27,5 et 32,5%, par exemple environ 30%, de l'air climatisé issu de l'échangeur de chaleur (12) vers chaque sortie latérale d'air (18).

4. Dispositif de climatisation (10) selon la revendication 2 ou 3, dans lequel la sortie arrière (20) d'air climatisé comporte un premier organe (22) d'orientation de flux d'air, propre à donner au flux d'air soufflé par cette sortie arrière une première direction de soufflage d'air (A) prédéfinie.

5. Dispositif de climatisation (10) selon la revendication 4, dans lequel la première direction de soufflage d'air (A) prédéfinie est sensiblement parallèle à la direction longitudinale (X).

6. Dispositif de climatisation (10) selon l'une quelconque des revendications 2 à 5, dans lequel :
- l'entrée avant d'air (16) présente une forme générale rectangulaire de longueur sensiblement égale à 600 mm et de largeur sensiblement égale à 23 mm,
- la sortie arrière d'air (20) présente une forme générale rectangulaire de longueur sensiblement égale à 600 mm et de largeur sensiblement égale à 12 mm,
- chaque sortie latérale d'air (18) présente une forme générale rectangulaire de longueur sensiblement égale à 300 mm et de largeur sensiblement égale à 25 mm.

7. Cabine de conduite (1), notamment pour un véhicule ferroviaire, délimitée en hauteur par un plafond (5), et délimitée dans une direction transversale par deux parois latérales (7), **caractérisée en ce qu'**elle comporte un dispositif de climatisation (10) selon l'une quelconque des revendications précédentes, dont le caisson de distribution d'air (14) est fixé au plafond (5), chaque sortie latérale d'air (18) étant agencée à proximité d'une paroi latérale (7) respective.

## Patentansprüche

1. Klimaanlage (10) für eine Fahrerkabine (1), insbesondere eines Schienenfahrzeugs, umfassend:
- einen Wärmetauscher (12), der ausgelegt ist, um die Wärme mit Luft zu tauschen, die in der Klimaanlage (10) zirkuliert,
- einen Kasten (14) zur Verteilung von Luft, der sich gemäß einer Längsrichtung (X) zwischen einem vorderen Teil (14A) und einem hinteren Teil (14B) erstreckt, und gemäß einer Querrichtung zwischen zwei seitlichen Teilen (14C), wobei der Verteilerkasten ausgelegt ist, um an eine Decke (5) der Fahrerkabine (1) fixiert zu werden, und umfassend:
- an seinem vorderen Teil (14A) einen vorderen Eintritt (16) von Luft, die aus der Kabine (1) stammt, der vorgelagert mit dem Wärmetauscher (12) verbunden ist, und
- an jedem seiner seitlichen Teile (14C) einen entsprechenden seitlichen Ausgang (18) von klimatisierter Luft, der nachgelagert mit dem Wärmetauscher (12) verbunden ist,
**dadurch gekennzeichnet, dass**:
- jeder seitliche Ausgang (18) von klimatisierter Luft ein zweites Organ (24) zur Ausrichtung des Luftflusses umfasst, das geeignet ist, um dem Luftfluss, der von diesem seitlichen Ausgang (18) geblasen wird, eine jeweilige zweite vordefinierte Blasrichtung (B) zu geben,
- bei jedem seitlichen Ausgang (18) die entsprechende zweite vordefinierte Blasrichtung (B) einen Winkel bildet, der zwischen 20 und 25°, z. B. 22°, mit einer Querebene senkrecht zur Längsrichtung (X) liegt, wobei der Fluss von klimatisierter Luft vorzugsweise nach vorne gerichtet ist, und
- bei jedem seitlichen Ausgang (18) die entsprechende zweite vordefinierte Blasrichtung (B) einen Winkel bildet, der zwischen 40 und 50°, z. B. 45°, mit einer Längsebene senkrecht zur Querrichtung (Y) liegt, wobei der Fluss von klimatisierter Luft vorzugsweise ausgelegt ist, um hin zu einer seitlichen Wand (7) der Kabine (1) gerichtet zu sein.

2. Klimaanlage (10) nach Anspruch 1, wobei der Verteilerkasten (14) in seinem hinteren Teil (14B) einen hinteren Ausgang (20) von klimatisierter Luft umfasst, der nachgelagert vom Wärmetauscher (12) verbunden ist.

3. Klimaanlage (10) nach Anspruch 2, wobei der Verteilerkasten (14) Mittel zur Verteilung von klimatisierter Luft umfasst, die aus dem Wärmetauscher stammt, die geeignet sind, um zu leiten:
- zwischen 35 und 45 % , z. B. ungefähr 40 % klimatisierter Luft, die aus dem Wärmetauscher (12) stammt, hin zum hinteren Ausgang von Luft (20), und
- zwischen 27,5 und 32,5 %, z. B. ungefähr 30 % klimatisierter Luft, die aus dem Wärmetauscher (12) stammt, hin zu jedem seitlichen Ausgang von Luft (18).

4. Klimaanlage (10) nach Anspruch 2 oder 3, wobei der hintere Ausgang (20) von klimatisierter Luft ein erstes Organ (22) zur Ausrichtung des Luftflusses umfasst, das geeignet ist, dem Luftfluss, geblasen von diesem hinteren Ausgang, eine erste vordefinierte Luftblasrichtung (A) zu verleihen.

5. Klimaanlage (10) nach Anspruch 4, wobei eine erste vordefinierte Luftblasrichtung (A) im Wesentlichen parallel zur Längsrichtung (X) ist.

6. Klimaanlage (10) nach einem der Ansprüche 2 bis 5, wobei
- der vordere Lufteingang (16) eine im Wesentlichen rechtwinklige Form mit einer Länge aufweist, die im Wesentlichen gleich 600 mm ist, und einer Breite, die im Wesentlichen gleich 23 mm ist,
- der hintere Luftausgang (20) eine im Wesentlichen rechtwinklige Form mit einer Länge aufweist, die im Wesentlichen gleich 600 mm ist, und einer Breite, die im Wesentlichen gleich 12 mm ist,
- jeder seitliche Luftausgang (18) eine im Wesentlichen rechtwinklige Form mit einer Länge aufweist, die im Wesentlichen gleich 300 mm ist, und einer Breite, die im Wesentlichen gleich 25 mm ist.

7. Fahrerkabine (1), insbesondere für ein Schienenfahrzeug, das in der Höhe durch eine Decke (5) begrenzt ist und in einer Querrichtung durch zwei seitliche Wände (7) begrenzt ist, **dadurch gekennzeichnet, dass** sie eine Klimaanlage (10) nach einem der vorhergehenden Ansprüche umfasst, deren Luftverteilerkasten (14) an die Decke (5) fixiert ist, wobei jeder seitliche Luftausgang (18) in der Nähe einer entsprechenden seitlichen Wand (7) angeordnet ist.

## Claims

1. An air conditioning device (10) for a driving cabin (1), in particular of a railway vehicle, including:
- a heat exchanger (12) intended to exchange heat with the air circulating in the air conditioning device (10),
- an air distribution box (14), extending in a longitudinal direction (X) between a front part (14A) and a rear part (14B), and in a transverse direction between two side parts (14C), the distribution box being intended to be fastened to a ceiling (5) of the driving cabin (1), and comprising:
• in its front part (14A), a front inlet (16) for air coming from the cabin (1), connected upstream from the heat exchanger (12), and
• in each of its side parts (14C), a respective side outlet (18) for conditioned air, connected downstream from the heat exchanger (12)
**characterized in that**:
- each side conditioned air outlet (18) includes a second member (24) directing the flow of air, able to give the stream of air blown by that side outlet (18) a respective predefined second air blowing direction (B),
- for each side outlet (18), the corresponding second predefined blowing direction (B) forms an angle comprised between 20 and 25°, for example 22°, with a transverse plane perpendicular to the longitudinal direction (X), the conditioned air flow preferably being oriented toward the front, and
- for each side outlet (18), the corresponding second predefined blowing direction (B) forms an angle comprised between 40 and 50°, for example 45°, with a longitudinal plane perpendicular to the transverse direction (Y), the conditioned air flow being intended to be oriented toward a side wall (7) of the cabin (1).

2. The air conditioning device (10) according to claim 1, wherein in its rear part (14B), the distribution box (14) includes a rear outlet (20) for conditioned air, connected downstream from the heat exchanger (12).

3. The air conditioning device (10) according to claim 2, wherein the distribution box (14) includes means for distributing the conditioned air from the heat exchanger, able to steer:
- between 35 and 45%, for example around 40%, of the conditioned air from the heat exchanger (12) toward the rear air outlet (20), and
- between 27.5 and 32.5%, for example around 30%, of the conditioned air from the heat exchanger (12) toward each side air outlet (18).

4. The air conditioning device (10) according to claim 2 or 3, wherein the rear conditioned air outlet (20) includes a first member (22) directing the flow of air, able to give the stream of air blown by that rear outlet a first predefined air blowing direction (A).

5. The air conditioning device (10) according to claim 4, wherein the first predefined air blowing direction (A) is substantially parallel to the longitudinal direction (X).

6. The air conditioning device (10) according to any one of claims 2 to 5, wherein:
- the front air inlet (16) has a generally rectangular shape with a length substantially equal to 600 mm and a width substantially equal to 23 mm,
- the rear air outlet (20) has a generally rectangular shape with a length substantially equal to 600 mm and a width substantially equal to 12 mm,
- each side air outlet (18) has a generally rectangular shape with a length substantially equal to 300 mm and a width substantially equal to 25 mm.

7. A driving cabin (1), in particular for a railway vehicle, defined heightwise by a ceiling (5), and defined in a transverse direction by two side walls (7), **characterized in that** it includes an air conditioning device (10) according to any one of the preceding claims, the air distribution box (14) of which is fastened to the ceiling (5), each side air outlet (18) being arranged near a respective side wall (7).
